# FASCICULE DE BREVET EUROPEEN

(11) **EP 3 338 409 B1**
(45) Date de publication et mention de la délivrance du brevet: **28.08.2019**
(21) Numéro de dépôt: 16736536.0
(22) Date de dépôt: 20.06.2016
(51) Int. Cl.: H04L 12/24

(54) **PROCÉDÉ DE GESTION DYNAMIQUE D'UN SERVICE RÉSEAU DANS UN RÉSEAU DE COMMUNICATION**
VERFAHREN ZUR DYNAMISCHEN VERWALTUNG EINES NETZWERKDIENSTES IN EINEM KOMMUNIKATIONSNETZWERK
METHOD FOR DYNAMICALLY MANAGING A NETWORK SERVICE IN A COMMUNICATION NETWORK

(30) Priorité: 26.06.2015 FR 1555932
(43) Date de publication de la demande: 27.06.2018
(73) Titulaire: Orange, 75015 Paris (FR)
(72) Inventeur: FROMENTOUX, Gaël, 22560 Pleumeur Bodou (FR); FIEAU, Frédéric, 75013 Paris (FR); BIHANNIC, Nicolas, 22560 Trebeurden (FR)
(86) Numéro de dépôt international: PCT/FR2016/051502
(87) Numéro de publication internationale: WO 2016/207529

(56) Documents cités:
- "Network Functions Virtualisation (NFV); Resiliency Requirements", GROUP SPECIFICATION, EUROPEAN TELECOMMUNICATIONS STANDARDS INSTITUTE (ETSI), 650, ROUTE DES LUCIOLES ; F-06921 SOPHIA-ANTIPOLIS ; FRANCE, vol. NFV REL, no. V1.1.1, 1 janvier 2015 (2015-01-01), XP014235737,
- "Network Functions Virtualisation (NFV); Use Cases", GROUP SPECIFICATION, EUROPEAN TELECOMMUNICATIONS STANDARDS INSTITUTE (ETSI), 650, ROUTE DES LUCIOLES ; F-06921 SOPHIA-ANTIPOLIS ; FRANCE, vol. NFV, no. V1.1.1, 1 octobre 2013 (2013-10-01), XP014157405, cité dans la demande
- Etsi Etsi: "Network Functions Virtualisation (NFV); Architectural Framework", , 1 octobre 2013 (2013-10-01), XP055137013, Extrait de l'Internet: URL:http://www.etsi.org/deliver/etsi_gs/NF V/001_099/002/01.01.01_60/gs_NFV002v010101 p.pdf [extrait le 2014-08-28]

## Description

L'invention se situe dans le domaine des réseaux de télécommunication, et concerne plus particulièrement un procédé de gestion dynamique d'un service réseau dans un réseau de communication.

L'organisme de normalisation ETSI (pour « European Télécommunications Standards Institute ») a lancé début 2013 un projet dénommé NFV (pour «Network Functions Virtualization ») pour établir, entre les experts des secteurs des télécommunications et des technologies de l'information, les premières spécifications dans le domaine de la virtualisation (c'est-à-dire de la dématérialisation) des fonctions utilisées dans les réseaux de télécommunications, désignées par la suite par fonctions réseaux virtualisées, dites « fonctions VNF » (pour « Virtual Network Function »). Ces fonctions réseaux virtualisées permettent de mettre en oeuvre des architectures réseaux variées (e.g. coeur de réseau EPC pour « Evolved Packet Core », architecture réseau IMS pour « Internet protocol Multimedia Subsystem », réseau de distribution de contenus CDN pour « Content Delivery Network »). Un service réseau est plus particulièrement défini par une séquence d'au moins une fonction réseau virtualisée mise en oeuvre par exemple par un ou plusieurs modules logiciels. La virtualisation de ces fonctions est réalisée notamment par des systèmes informatiques interconnectés qui implémentent et hébergent ces fonctions sur des machines virtuelles accessibles par exemple par l'intermédiaire d'une application réseau. Ces machines virtuelles utilisent des ressources informatiques et matérielles distantes (e.g. connectivité réseau, puissance de calcul, espaces de stockage, serveurs, applications, etc.), gérées par le système informatique en nuage, et mutualisées entre ses différents clients en fonction de leurs besoins respectifs. Les clients peuvent ainsi accéder de manière évolutive à ces ressources, sans avoir à administrer l'infrastructure sous-jacente de gestion de ces ressources qui est souvent complexe. Le document "Network Functions Virtualisation (NFV); Resiliency Requirements",GROUP SPECIFICATION, ETSI, vol. NFV REL, no. V1.1.1, 1 janvier 2015 traite des aspects de la disponibilité de réseaux et services dans un environnement de réseau virtualisé et décrit une méthode pour instancier une nouvelle VNF identique à la VNF défaillante mais ne propose pas que la VNF puisse être remplacée ou complétée par une nouvelle fonction réseau virtualisée apte à l'exécution stable d'un service réseau.

Le document de spécifications GS NFV 001 v.1.1.1 de l'ETSI, publié en octobre 2013, intitulé « Network Functions Virtualization (NFV) ; Use Cases », présente plusieurs cas d'usage de la virtualisation de fonctions réseaux. Ce document décrit de manière très générale la virtualisation de fonctions réseaux dans différents contextes (virtualisation d'un réseau mobile, d'une station de base, d'un réseau de distribution de contenus, etc.). Les services réseaux proposés dans une telle architecture de réseau virtualisé sont notamment limités à un catalogue de services réseaux prédéfini et maintenu par une entité d'orchestration, dite « entité NFVO » (pour « Network Functions Virtualization Orchestrator »). La création des fonctions réseaux virtualisées est en outre réalisée par des entités de gestion de ressources virtualisées, dite « entités VNFM » (pour « Virtual Network Function Manager »), sous le pilotage de l'entité d'orchestration.

Ce type d'architecture de réseau virtualisé souffre de certains inconvénients. L'intervention systématique de l'entité d'orchestration lors de la création de services réseaux virtualisées ne permet pas de répondre avec réactivité à une évolution des conditions réseaux (e.g. hausse du trafic relatif au service, incident réseau) dans lesquelles un service réseau est mis en oeuvre. La mise en oeuvre planifiée à l'avance de ces services peut également s'avérer inadaptée aux conditions réelles d'exploitation de ces services.

Un des buts de l'invention est de remédier à des insuffisances/inconvénients de l'état de la technique et/ou d'y apporter des améliorations.

Selon un premier aspect, l'invention concerne un procédé de gestion, dans un réseau de communication, d'un service réseau en cours d'exécution, le service réseau étant formé d'une séquence d'au moins une fonction réseau virtualisée gérée par une entité de gestion de ressources virtualisées, comprenant les étapes suivantes mises en oeuvre par une entité d'optimisation de fonctions réseaux virtualisées :
- réception d'un flux de signalisation et/ou de caractérisation d'un média depuis une fonction réseau virtualisée de la séquence, dite « fonction initiale » ;
- détermination, en fonction du flux de signalisation et/ou de caractérisation d'un média reçu, et d'une règle de gestion prédéfinie associée au flux, que la fonction initiale dispose de capacités insuffisantes pour l'exécution stable du service réseau ;
- envoi, à l'entité de gestion de ressources virtualisées, d'une commande de mise à jour comprenant au moins une action, obtenue à partir de la règle de gestion associée audit flux, de mise à jour de la séquence, la fonction initiale étant, après exécution de la commande, remplacée ou complétée dans la séquence par au moins une nouvelle fonction réseau virtualisée apte à l'exécution stable du service réseau.

Le procédé permet une mise à jour dynamique du service réseau en cours d'exécution. Il est ainsi possible de répondre en temps réel à des demandes non planifiées pour ce service. Une telle demande non planifiée correspond par exemple à une hausse non anticipée de demandes relatives à un service qui tend à perdurer dans le temps. Le service réseau peut alors grâce au procédé être modifié à la demande.

L'analyse du flux de signalisation et/ou de caractérisation d'un média (e.g. flux WebRTC pour « Web Real-Time Communication », flux vidéo HAS pour « HTTP Adaptive Streaming », informations de contrôle relative à un flux média) reçu par l'entité d'optimisation, permet en outre d'identifier, avec précision et en temps réel, l'adéquation de la fonction réseau virtualisée émettrice de ce flux avec des conditions actualisées de trafic réseau. La prise en compte de règles de gestion prédéfinies permet en outre de vérifier par exemple que la fonction initiale répond à des critères de qualité de service définis par l'opérateur du réseau de communication, et de déclencher le cas échéant sa mise à jour. Ces mêmes règles de gestion permettent également d'obtenir des actions de mise à jour de la séquence, tel que le remplacement de la fonction initiale par une nouvelle fonction réseau virtualisée apte à une exécution stable du service réseau. Une telle règle de gestion correspond par exemple, à un seuil prédéfini relatif à un paramètre de qualité de service donné associé au service réseau mis en oeuvre, en dessous duquel la fonction initiale est considérée disposer de capacités insuffisantes pour l'exécution stable du service réseau en cours d'exécution. Réciproquement, la mise à jour de la fonction réseau virtualisée est telle qu'après mise à jour de la séquence, le paramètre de qualité de service donnée associé au service réseau mis en oeuvre, soit supérieur à ce seuil.

Le procédé permet en outre une plus grande réactivité lors de la mise en oeuvre du service, en cas de fluctuation durable du trafic réseau relatif au service. La commande de mise à jour de la séquence de fonctions réseaux virtualisées est directement envoyée à l'entité de gestion de ressources virtualisées qui gère la fonction réseau virtualisée à modifier dans la séquence. Il est ici rappelé que dans l'état de l'art, aucune modification de la séquence de fonctions réseaux ne peut être effectuée pendant que le service s'exécute, sans sollicitation préalable d'une entité d'orchestration en charge du pilotage des entités de gestion de ressources virtualisées du réseau. Le procédé présente ainsi l'avantage de permettre une mise à jour autonome du service réseau, en cours de son exécution, rapide, et sans intervention d'autres entités tierces.

La mise à jour de la séquence étant en outre réalisée en temps réel, le procédé permet d'assurer la continuité du service réseau mis en oeuvre. De plus, la mise à jour étant instantanée, elle demeure transparente pour le terminal ou tout autre dispositif utilisateur du service réseau en cours d'exécution. Le procédé permet ainsi d'améliorer à la fois la qualité de service et la qualité d'expérience associées au service réseau en cours d'exécution.

Selon une caractéristique particulière, le procédé comprend en outre une étape de détermination de capacités nécessaires pour l'exécution stable du service réseau, les capacités nécessaires étant envoyées à l'entité de gestion de ressources virtualisées avec la commande de mise à jour, la séquence étant mise à jour en fonction des capacités nécessaires.

La détermination de capacités nécessaires pour l'exécution stable du service réseau permet à l'entité d'optimisation de fonctions réseaux virtualisées de définir avec précision les besoins de mise à jour de la fonction réseau virtualisée de laquelle ont été reçus les flux de signalisation et/ou de caractérisation du média.

Selon une caractéristique particulière, la fonction initiale est mise en oeuvre dans une première zone géographique donnée. Le procédé comprend alors, préalablement à l'étape d'envoi, lorsque la fonction initiale est mise en oeuvre par des ressources saturées de la première zone, une détermination d'une deuxième zone géographique disposant de ressources non-saturées, la commande de mise à jour commandant une mise à jour de la séquence, dans laquelle la au moins une nouvelle fonction réseau virtualisée appartient à la deuxième zone géographique.

Le procédé permet avantageusement de recourir à des fonctions réseaux virtualisées d'une autre zone géographique que celle où est mise en oeuvre la fonction initiale. Selon les méthodes connues, dites « d'auto-scaling », la mise en oeuvre d'une nouvelle fonction réseau virtualisée ne peut se faire que sur la même infrastructure que celle où est mise en oeuvre la fonction initiale, ou autrement dit dans un même point de présence (en anglais PoP pour « Point of Presence »). Le service réseau peut ainsi avantageusement tirer parti de fonctions réseaux virtualisées mises en oeuvre par une infrastructure d'une zone géographique dont les ressources ne sont pas utilisées ou utilisées partiellement. Les ressources de l'infrastructure dans laquelle est mise en oeuvre la fonction initiale peuvent ainsi être déchargées, et la qualité de service améliorée.

Selon une caractéristique particulière, une fonction réseau virtualisée identique à la fonction initiale, dite « fonction identique », est mise en oeuvre dans la deuxième zone géographique avant l'étape d'envoi, et la commande de mise à jour commande à l'entité de gestion de ressources virtualisées de remplacer ou compléter dans la séquence, la fonction initiale par la fonction identique.

Lorsqu'une fonction réseau virtualisée d'une deuxième zone géographique existe et réalise déjà la fonction associée à la fonction initiale, il n'est pas nécessaire de créer une nouvelle fonction réseau virtualisée dans cette première zone. Les opérations de création de nouvelles fonctions réseaux virtualisées sont évitées. Seuls un routage des flux de signalisation de la fonction initiale vers la fonction identique de la deuxième zone géographique, et une mise à jour de la séquence sont nécessaires. Le procédé est ainsi accéléré.

Selon une caractéristique particulière, le service réseau formé d'une séquence d'au moins une fonction réseau virtualisée, dite « séquence initiale », appartient à un catalogue de services réseaux d'une entité d'orchestration en charge du pilotage des entités de gestion de ressources virtualisées du réseau, le procédé comprenant en outre :
- une notification, par l'entité de gestion de ressources virtualisées, à l'entité d'orchestration, de la séquence mise à jour ;
- une mise à jour, par l'entité d'orchestration, du service réseau formé de la séquence initiale dans le catalogue.

La mise à jour du catalogue de services réseaux est réalisée selon une approche ascendante par opposition aux méthodes connues de l'état de l'art qui reposent sur une approche descendante. Pour rappel, dans une approche descendante les services réseaux sont d'abord définis, puis les séquences de fonctions réseaux virtualisées configurées en fonction des services réseaux ainsi définis. Dans cette approche un service réseau inscrit au catalogue de services réseaux ne peut voir sa séquence de fonctions réseaux virtualisées modifiée par la suite. Seules les ressources affectées aux fonctions réseaux virtualisées sont susceptibles d'évoluer. L'approche ascendante consiste, quant à elle, à contrôler la mise en oeuvre de chacune des fonctions réseaux virtualisées de la séquence de fonctions réseaux virtualisées formant le service réseau exécuté. Ces fonctions réseaux virtualisées sont alors mises à jour individuellement sur initiative de l'entité d'optimisation de fonctions réseaux virtualisées, indépendamment des autres fonctions réseaux virtualisées de la séquence, en cas de nécessité. Ceci se produit notamment lorsque l'une de ces fonctions réseaux virtualisées ne disposent pas des capacités nécessaires pour remplir sa fonction. Chacune des fonctions réseaux virtualisées ainsi mises à jour contribue à la mise à jour du service réseau lui-même, c'est-à-dire à une redéfinition du service réseau ou à une définition d'un nouveau service réseau. Le procédé permet ainsi de valoriser la mise à jour de la séquence de fonctions réseaux virtualisées en cours d'exécution du service, en permettant la réutilisation ultérieure du service réseau ainsi optimisé. Il n'est alors plus nécessaire de réitérer le processus de mise à jour à partir par exemple, d'un service réseau initialement sous-dimensionné, ou ne correspondant plus à des exigences réactualisées de qualité de service relatives à ce service réseau.

Selon une caractéristique particulière, la mise à jour du service réseau formé de la séquence initiale consiste, dans le catalogue, en :
- une substitution du service réseau formé de la séquence initiale par un service réseau formé de la séquence mise à jour ; ou
- un ajout d'un service réseau formé de la séquence mise à jour.

La substitution dans le catalogue du service réseau formé de ladite séquence initiale par un service réseau formé de ladite séquence mise à jour, permet de ne maintenir dans le catalogue que des services réseaux « optimisés ». Ces services réseaux reposent en particulier sur des séquences de fonctions réseaux virtualisées dont les caractéristiques techniques sont adaptées aux dernières évolutions du trafic réseau qui leur sont associées. Ceci permet notamment de ne pas surcharger le catalogue, et de conserver un nombre limité de services réseaux lorsque par exemple la taille du catalogue est limitée par des contraintes d'espace mémoire ou par des contraintes opérationnelles.

Dans le cas où cependant il n'existe pas de contraintes d'espace mémoire quant à la taille du catalogue, un service réseau formé d'une séquence mise à jour peut simplement être ajouté au catalogue, le service réseau formé de la séquence initiale étant également conservé. Le procédé permet ainsi de revenir à la mise en oeuvre d'un service initialement au catalogue lorsque par exemple le trafic réseau relatif à un service réseau nouvellement ajouté diminue durablement, ce dernier service monopolisant inutilement certaines ressources du réseau.

Selon un deuxième aspect, l'invention concerne une entité d'optimisation de fonctions réseaux virtualisées, dans un réseau de communication. L'entité d'optimisation comprend :
- un module de réception, agencé pour recevoir un flux de signalisation et/ou de caractérisation d'un média depuis une fonction réseau virtualisée, dite «fonction initiale », d'une séquence d'au moins une fonction réseau virtualisée formant un service réseau en cours d'exécution ;
- un premier module de détermination, agencé pour déterminer en fonction du flux de signalisation et/ou de caractérisation d'un média reçu, et de règles de gestion prédéfinies associées au flux, que la fonction initiale dispose de capacités insuffisantes pour l'exécution stable du service réseau ;
- un module d'envoi, agencé pour envoyer à une entité de gestion de ressources virtualisées en charge de la gestion de la fonction initiale, une commande de mise à jour de la séquence, la fonction initiale étant, après exécution de la commande, remplacée ou complétée dans la séquence par au moins une nouvelle fonction réseau virtualisée apte à l'exécution stable du service réseau.

Selon une caractéristique particulière, l'entité d'optimisation comprend en outre un deuxième module de détermination, agencé pour déterminer des capacités nécessaires pour l'exécution stable du service réseau, le module d'envoi étant agencé pour envoyer les capacités, à l'entité de gestion de ressources virtualisées, avec la commande de mise à jour.

Selon une caractéristique particulière, l'entité d'optimisation selon le deuxième aspect comprend en outre un troisième module de détermination, agencé pour déterminer une zone géographique disposant de ressources non-saturées, le module d'envoi étant agencé pour envoyer une commande de mise à jour commandant une mise à jour de la séquence, dans laquelle la au moins une nouvelle fonction réseau virtualisée appartient à la zone géographique disposant de ressources non-saturées.

Selon un troisième aspect, l'invention concerne une entité de gestion de ressources virtualisées, dans un réseau de communication. L'entité de gestion de ressources virtualisées comprend :
- un module de gestion, agencé pour gérer une fonction réseau virtualisée, dite « fonction initiale », d'une séquence d'au moins une fonction réseau virtualisée formant un service réseau ;
- un module de réception, agencé pour recevoir depuis une entité d'optimisation de fonctions réseaux virtualisées, une commande de mise à jour de la séquence ;
- un module d'exécution, agencé pour exécuter la commande de mise à jour, la fonction initiale étant, après exécution de la commande, remplacée ou complétée dans la séquence par au moins une nouvelle fonction réseau virtualisée apte à une exécution stable du service réseau ;
- un module d'envoi, agencé pour envoyer à une entité d'orchestration une notification de mise à jour de la séquence.

Selon un quatrième aspect, l'invention concerne un système de gestion d'un service réseau, dans un réseau de communication. Le système comprend :
- une entité d'optimisation de fonctions réseaux virtualisées selon le deuxième aspect ; et
- une entité de gestion de ressources virtualisées selon le troisième aspect.

Selon une caractéristique particulière, le système comprend en outre :
- une entité d'orchestration en charge du pilotage d'au moins une entité de gestion de ressources virtualisées selon le troisième aspect.

Les avantages énoncés pour le procédé de gestion selon le premier aspect sont transposables directement à l'entité d'optimisation selon le deuxième aspect et au système de gestion selon le quatrième aspect.

Selon un cinquième aspect, l'invention concerne également un programme pour une entité d'optimisation de fonctions réseaux virtualisées, comprenant des instructions de code de programme destinées à commander l'exécution des étapes du procédé précédemment décrit, lorsque ledit programme est exécuté par ladite entité d'optimisation et un support d'enregistrement lisible par une entité d'optimisation sur laquelle est enregistré un programme pour une entité d'optimisation.

L'invention sera mieux comprise à l'aide de la description suivante de modes de réalisation particuliers, en référence aux dessins annexés sur lesquels :
- la figure 1 représente un système de gestion d'un service réseau selon un mode particulier de réalisation ;
- la figure 2 représente les étapes du procédé de gestion selon un mode particulier de réalisation ;
- la figure 3 représente une entité d'optimisation de fonctions réseaux virtualisées selon un mode particulier de réalisation ;
- la figure 4 représente une entité de gestion de ressources virtualisées selon un mode particulier de réalisation.

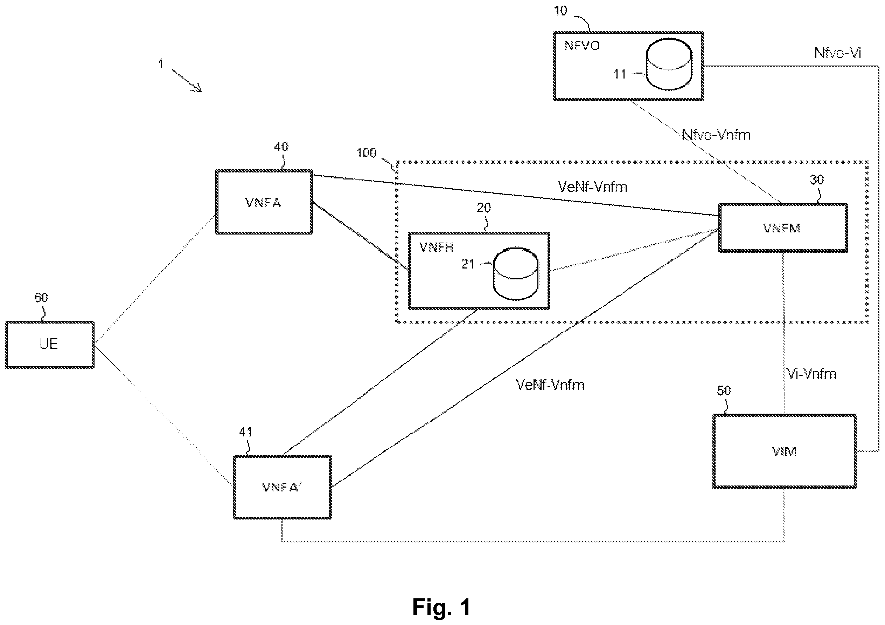

La **figure 1** représente un système 100 de gestion d'un service réseau dans son environnement selon un mode particulier de réalisation. Le système 100 comprend une entité d'optimisation de fonctions réseaux virtualisées 20 et une entité de gestion de ressources virtualisées 30. Optionnellement le système 100 comprend également une entité d'orchestration 10.

L'entité d'orchestration 10 est plus particulièrement en charge du pilotage des entités de gestion de ressources virtualisées 30 et des entités de gestion d'infrastructure virtualisée 50 du réseau de communication 1 dans lequel est mis en oeuvre le système 100. L'entité d'orchestration 10 dispose d'un catalogue 11 de services réseaux. Ce catalogue 11 est par exemple une base de données agencée pour mémoriser des services réseaux et des séquences d'au moins une fonction réseau virtualisée correspondant à ces services. Le catalogue précise notamment un comportement opérationnel prédéfini des fonctions réseaux virtualisées sur lesquelles reposent les services réseaux du catalogue 11, ainsi que les ressources nécessaires (e.g. nombre de machines virtuelles, mémoire, bande passante, latence) afin de déployer ces fonctions et mettre en oeuvre les services réseaux du catalogue. Les fonctions réseaux virtualisées sont décrites par des descripteurs de fonctions réseaux virtualisées (en anglais « VNF descriptor » pour « Virtual Network Function descriptor ») tels que définis par l'ETSI. Les fonctions réseaux virtualisées correspondent à des fonctions fournies par l'opérateur du réseau de communication 1 pour traiter un paquet de données émis par exemple depuis un terminal utilisateur 60. Il s'agit à titre d'exemple non limitatif de services de traduction d'adresses réseaux, de pare-feu, de services de répartition de charge, de transcodage, de mise en cache, d'optimisation de requête, ou encore d'enrichissement de paquets réseaux.

Selon l'architecture NFV définie dans le document de spécifications de l'ETSI « GS NFV-MAN 001 » publié en juillet 2014, lorsqu'un service réseau du catalogue 11 est mis en oeuvre dans le réseau de communication 1, l'entité d'orchestration 10 s'adresse aux entités de gestions de ressources virtualisées en charge de gérer les fonctions réseaux virtualisées de la séquence d'au moins une fonction réseau virtualisée formant ce service réseau. Chaque entité de gestion de ressources virtualisées est associée à une fonction réseau virtualisée de la séquence. Une entité de gestion de ressources virtualisées a plus particulièrement pour rôle de gérer le cycle de vie d'une fonction réseau virtualisée, c'est-à-dire sa création, sa mise en oeuvre et sa terminaison. Les fonctions réseaux virtualisées sont à cette fin installées sur des machines virtuelles (cf. supra) crées et gérées par une entité de gestion d'infrastructure virtualisée 50. Une entité de gestion de ressources virtualisée reçoit en provenance d'une fonction réseau virtualisée dont elle a la charge, des informations dites « FCAPS » (pour « Fault, Configuration, Accounting, Performance, Security ») de gestion d'erreur, de configuration, d'usage, de performance, et de sécurité relatives à cette fonction réseau virtualisée. Ces informations permettent notamment à une telle entité de gestion de ressources virtualisées d'adapter les ressources affectées à une fonction réseau virtualisée. A titre d'exemple, l'entité de gestion de ressources virtualisées 30 est en charge de la gestion des fonctions réseaux virtualisées A 40 et A' 41. Ces fonctions réseaux virtualisées 40-41 assurent par exemple les fonctions d'un serveur web proxy.

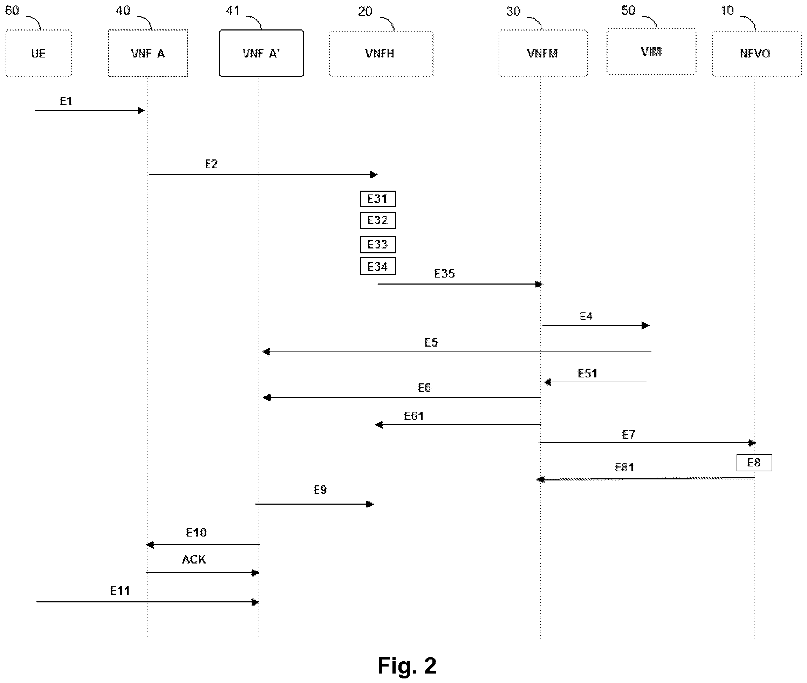

Le système 100 comprend par ailleurs une entité d'optimisation 20 de fonctions réseaux virtualisées. Cette entité d'optimisation 20 est interfacée avec l'entité de gestion de ressources virtualisées 30 et les fonctions réseaux virtualisées 40-41. L'entité d'optimisation 20 permet d'initier une modification dynamique d'un service réseau en cours d'exécution. Elle permet notamment d'adapter une mise en oeuvre initiale d'un service réseau du catalogue 11. L'entité d'optimisation 20 reçoit des informations FCAPS (e.g. indicateurs d'alarmes, de performances) ainsi que des flux de signalisation émis par des fonctions réseaux virtualisées 40-41. Les flux de signalisation sont par exemple des flux temps réel de type WebRTC, ou encore des flux relatifs à un profil de trafic média (e.g. informations d'encodage, débit, latence), également appelés flux de caractérisation d'un média. L'entité d'optimisation 20 dispose en outre de règles de gestion 21 prédéfinies par l'opérateur du réseau de communication 1. Ces règles de gestions sont associées aux types de flux émis par les fonctions réseaux virtualisées 40-41. Lorsqu'elles sont combinées aux informations obtenues depuis les fonctions réseaux virtualisées 40-41, elles permettent à l'entité d'optimisation 20 de déterminer qu'une fonction réseau virtualisée dispose de capacités insuffisantes pour l'exécution stable du service réseau en cours d'exécution. L'entité d'optimisation 20 initie alors une mise à jour de la fonction réseau virtualisée 40 en cours d'exécution en déterminant une entité de gestion de ressources virtualisées 30 vers laquelle envoyer une commande de mise à jour comprenant au moins une action, obtenue à partir de la règle de gestion associée au flux émis, de mise à jour de la séquence. La mise à jour d'une fonction réseau virtualisée sera détaillée par la suite en relation avec la figure 2. A titre d'exemple illustratif, la fonction réseau virtualisée en cours d'exécution A 40 est mise à jour et remplacée par la fonction réseau virtualisée A' 41, cette dernière fonction permettant d'assurer une exécution stable du service réseau en cours d'exécution.

Les communications entre l'entité de gestion de ressources virtualisées 30, l'entité de gestion d'infrastructure virtualisée 50 et les fonctions réseaux virtualisées 40-41 du réseau de communication 1 sont réalisées par l'intermédiaire des interfaces telles que définies dans le document de spécifications « GS NFV-MAN 001 ». Plus précisément, l'entité de gestion de ressources virtualisées 30 communique avec la fonction réseau virtualisée 40 et avec la fonction réseau virtualisée 41 via des interfaces VeNf-Vnfm. L'entité de gestion de ressources virtualisées 30 communique également avec l'entité de gestion d'infrastructure virtualisée 50 via une interface Vi-Vnfm.

L'interface Nfvo-Vnfm permettant la communication entre l'entité d'orchestration 10 et l'entité de gestion de ressources virtualisées 30 est en outre enrichie par rapport à sa définition dans le document de spécifications de l'ETSI, et permet notamment de notifier une mise à jour d'un service en cours d'exécution initiée par l'entité d'optimisation 20, et comprend l'envoi d'informations telles que des indicateurs de popularité d'un service réseau, ou encore de qualité de service rendue par un service réseau. L'entité d'orchestration 10 est ainsi en mesure d'enrichir son catalogue 11 de services réseaux.

Seule une entité de gestion de ressources virtualisées 30 est représentée, il n'existe cependant aucune limitation quant au nombre d'entité de gestion de ressources virtualisées mises en oeuvre pour fournir un service réseau. En outre, dans un autre mode de réalisation, de même qu'une entité de gestion de ressources virtualisées 30 est susceptible de gérer plusieurs fonctions réseaux virtualisées, une fonction réseau virtualisée est susceptible d'être gérée par une ou plusieurs entités de gestion de ressources virtualisées.

Seules deux fonctions réseaux virtualisées 40-41 sont représentées, il n'existe cependant aucune limitation quant au nombre de fonctions réseaux virtualisées de la séquence de fonctions réseaux virtualisées formant un service réseau.

Le procédé de gestion d'un service réseau en cours d'exécution va maintenant être décrit en relation avec la **figure 2****.** Par la suite, on se place dans une configuration réseau telle que celle décrite en relation avec la figure 1.

Lors d'une étape E1, le terminal UE 60 envoie une requête HTTP (pour « HyperText Transfert Protocol ») à la fonction réseau virtualisée VNF A 40. La fonction réseau virtualisée VNF A 40 correspond par exemple à une fonction proxy web, dite « fonction initiale » d'une séquence S d'au moins une fonction réseau virtualisée formant un service réseau SR d'un catalogue de services réseaux de l'entité d'orchestration NFVO 10.

Lors d'une étape E2, la fonction initiale VNF A 40 subit une surcharge qu'elle notifie à l'entité d'optimisation de fonctions réseaux virtualisées 20 par l'intermédiaire d'un flux de signalisation. Cette notification correspond par exemple à une information de trafic réseau relative à un temps de chargement d'une page web ou d'un élément d'une page web au-dessus d'une valeur seuil prédéfinie et permettant d'identifier une surcharge réseau. La fonction initiale VNF A 40 utilise, afin de joindre l'entité d'optimisation de fonctions réseaux virtualisées 20, une adresse de cette dernière obtenue par exemple lors de la configuration initiale du service réseau SR en cours d'exécution. L'entité d'optimisation 20 de fonctions réseaux virtualisées reçoit ainsi le flux de signalisation avec une information selon laquelle la fonction initiale 40 est surchargée.

Lors d'une étape E31, l'entité d'optimisation 20 identifie alors le type du flux de signalisation reçu. Cette identification est par exemple réalisée à partir d'un entête d'un paquet de données du flux de signalisation. A titre d'exemple on suppose que le flux est de type WebRTC.

Puis dans une étape E32, l'entité d'optimisation 20 détermine en fonction du flux de signalisation et d'une règle de gestion 21 prédéfinie associée au flux, que la fonction initiale 40 dispose de capacités insuffisantes pour l'exécution stable du service réseau SR. Pour cela l'entité d'optimisation 20 obtient à partir du type de flux de signalisation une règle de gestion 21 indiquant un ou plusieurs critères relatifs par exemple à une qualité de service à respecter pour le service réseau SR. A titre d'exemple les règles de gestion 21 sont mémorisées localement par l'entité d'optimisation 20 dans une structure de données ayant la forme suivante :

| Type de flux | Condition(s) | Action(s) |
|---|---|---|
| WebRTC | latence > 100 ms | creer_sur_PoP_non_chargé(VNF A') |
| | et | |
| | surcharge_PoP | |
| Vidéo HAS | débit < D | dupliquer(VNF A ; VNF A') |

Les règles définies par cette structure de données permettent d'identifier des actions à réaliser pour un type de flux donné et sous certaines conditions afin d'assurer une exécution stable du service réseau SR en modifiant sa séquence S de fonctions réseaux virtualisées. Ces actions comprennent au moins une action de mise à jour de la fonction initiale 40. Les règles de gestion indiquent dans cet exemple, pour un flux WebRTC, lorsque la latence mesurée est supérieure à 100 ms et que le point de présence dans lequel s'exécute le service réseau SR est surchargé, de créer une fonction réseau virtualisée VNF A' 41 sur un point de présence non chargé. De même, pour un flux vidéo HAS, ces règles indiquent de dupliquer la fonction réseau virtualisée lorsque le débit constaté est inférieur à un seuil D prédéfini par l'opérateur. Ces règles de gestion sont données à titre illustratif, il n'existe cependant pas de limitation quant aux critères pouvant être pris en compte dans ces règles. Ainsi le critère de débit constaté pour un flux vidéo HAS peut selon le cas avantageusement être remplacé par un temps de démarrage de session supérieur à un seuil prédéfini, par un temps de mise en mémoire tampon supérieur à un seuil prédéfini, ou encore par toute autre mesure relative à une session en cours. Les actions de mises à jour correspondent ainsi, selon que le flux est de type WebRTC ou « vidéo HAS », respectivement à une création d'une fonction réseau virtualisée VNF A' 41, et à une duplication de la fonction initiale VNF A 40 en une fonction réseau virtualisée VNF A' 41. Les actions de mises à jour ne se limitent pas à une création ou à une duplication d'une fonction réseau virtualisée. Une telle action peut également consister à compléter dans la séquence une fonction réseau virtualisée par une ou plusieurs autres fonctions réseaux virtualisées.

La fonction réseau virtualisée VNF A' 41 est telle qu'une mise en oeuvre stable du service réseau SR soit assurée. Pour qu'une mise en oeuvre stable du service réseau SR soit assurée, ou autrement dit pour répondre ici à l'augmentation de charge détectée à l'étape E2, l'entité d'optimisation 20 détermine lors d'une étape E33, plusieurs caractéristiques attendues pour la fonction réseau virtualisée VNF A' 41. Il s'agit notamment de déterminer les capacités nécessaires à la fonction réseau virtualisée VNF A' 41 pour l'exécution stable du service réseau SR. L'entité d'optimisation 20 détermine notamment des critères de performances attendues (e.g. perte de paquet autorisée, latence maximale tolérée, contrainte géographique), des fonctionnalités applicatives devant être supportées par la fonction réseau virtualisée VNF A' 41 (e.g. fonctionnalités 3GPP MTC pour « 3rd Generation Partnership Project Machine Type Communication », fonctionnalités 3GPP PMR pour « 3rd Generation Partnership Project Professional Mobile Radio »), et la localisation réseau de la fonction réseau virtualisée VNF A' 41. Lorsque les ressources de la zone géographique dans laquelle est mise en oeuvre la fonction initiale VNF A 40 sont saturées, la localisation réseau pour la VNF A' 41 est par ailleurs choisie de telle sorte que la zone dans laquelle la fonction réseau virtualisée VNF A' 41 sera mise en oeuvre comprend des ressources non saturées et soit distincte de la zone dans laquelle est mise en oeuvre la fonction initiale VNF A 40.

A la fin des étapes E32 et E33, les actions ainsi que les caractéristiques permettant de mettre à jour la séquence S de fonctions réseaux virtualisées formant le service réseau SR sont identifiées.

Dans une étape E34, l'entité d'optimisation 20 identifie ensuite une entité de gestion de ressources virtualisées 30 vers qui envoyer une commande de mise à jour de la séquence S. L'entité d'optimisation 20 obtient à partir du flux de signalisation reçu à l'étape E2 un identifiant de la fonction initiale VNF A 40, et au moyen par exemple d'une table de correspondance prédéfinie, identifie l'entité de gestion de ressources virtualisées 30 en charge de cette fonction.

Puis, lors d'une étape E35, l'entité d'optimisation 20 envoie la commande de mise à jour à l'entité de gestion de ressources virtualisées 30 avec les actions identifiées à l'étape E32 et les caractéristiques requises telles que déterminées à l'étape E33. L'entité d'optimisation 20 demande ainsi à l'entité de gestion de ressources virtualisées 30 la création d'une nouvelle fonction réseau virtualisée VNF A' 41 afin d'assurer la stabilité du service réseau SR en réponse à l'augmentation de charge détectée à l'étape E2.

Lors d'une étape E4, l'entité de gestion de ressources virtualisées 30 envoie à l'entité de gestion d'infrastructure virtualisée 50 les caractéristiques requises pour la fonction réseau virtualisée VNF A' 41 dont elle demande la création.

Lors d'une étape E5, l'entité de gestion d'infrastructure virtualisée 50 demande aux ressources physiques de l'infrastructure virtualisée l'allocation de nouvelles ressources pour la fonction réseau virtualisée VNF A' 41. La fonction réseau virtualisée VNF A' 41 est alors créée sur les ressources physiques allouées à cet effet.

Lors d'une étape E51, l'entité de gestion d'infrastructure virtualisée 50 envoie un acquittement à l'entité de gestion de ressources virtualisées 30 indiquant à cette dernière que des ressources physiques ont été allouées pour la fonction réseau virtualisée VNF A' 41.

Lors d'une étape E6, l'entité de gestion de ressources virtualisées 30 met en oeuvre la fonction réseau élémentaire VNF A' 41 sur les ressources physiques allouées par l'entité de gestion d'infrastructure virtualisée 50.

Puis dans une étape E61, l'entité de gestion de ressources virtualisées 30 envoie un acquittement à l'entité d'optimisation 20 lui indiquant que la fonction réseau virtualisée VNF A' 41 a été mise en oeuvre en réponse à la commande de mise à jour du service réseau SR.

Lors d'une étape E7, l'entité de gestion de ressources virtualisée 30 notifie l'entité d'orchestration 10 de la mise à jour de la séquence S de fonctions réseaux virtualisées en l'informant que la fonction réseau virtualisée VNF A' 41 a été créée.

Puis lors d'une étape E8, l'entité d'orchestration 10 met à jour son catalogue de services réseaux. Plus précisément, l'entité d'orchestration 10 met à jour la séquence de fonctions réseaux virtualisées pour le service réseau SR de son catalogue de services réseaux. Pour cela, l'entité d'orchestration 10 modifie le service réseau SR en substituant la séquence de fonctions réseaux virtualisées initialement au catalogue par la séquence mise à jour. Cette mise à jour comprend également les caractéristiques nécessaires à une mise en oeuvre stable du service réseau SR (e.g. information relative à la connectivité entre fonctions réseaux virtualisées, localisation de la nouvelle fonction réseau virtualisée, ressources allouées). Dans un autre mode de réalisation la mise à jour du catalogue est réalisée par ajout d'un nouveau service réseau correspondant à la séquence mise à jour dans le catalogue 11 de services réseaux.

Dans une étape E81, l'entité d'orchestration 10 notifie à l'entité de gestion de ressources virtualisées 30 la mise à jour du service réseau SR dans son catalogue.

Lors d'une étape E9, la fonction réseau virtualisée VNF A' 41 envoie à l'entité d'optimisation une demande de prise en charge des sessions en cours actuellement traitées par la fonction initiale VNF A 40.

Dans une étape E10, la fonction réseau virtualisée VNF A' 41 informe la fonction initiale VNF A 40 qu'elle prend en charge les flux pour lesquels une surcharge du trafic réseau a été identifiée à l'étape E2. La fonction réseau virtualisée VNF A 40 envoie un message d'acquittement à la fonction réseau virtualisée VNF A' 41 en réponse à la demande de prise en charge. Les requêtes émises par le terminal UE 60 qui n'ont pas pu être traitées par la fonction réseau virtualisée VNF A 40 peuvent ainsi être traités par la fonction réseau virtualisée VNF A' 41.

Enfin dans une dernière étape E11, les nouvelles requêtes émises par le terminal UE 60, en plus des flux pour lesquels une surcharge du trafic réseau a été identifiée sont directement traitées pas la fonction réseau virtualisée VNF A' 41. Ce mode de fonctionnement demeure tant que la fonction initiale VNF A 40 est considérée surchargée par l'entité d'optimisation 20. La stabilité du service réseau SR est ainsi assurée. Si en revanche le trafic réseau n'est plus surchargé, une nouvelle mise à jour de la séquence de fonctions réseaux virtualisées en cours d'exécution peut être déclenchée par l'entité d'optimisation 20 afin de mettre de nouveau à jour le service réseau en cours d'exécution, en fonction par exemple d'un nouvel état de trafic mesuré en temps réel et notifié de cette dernière entité à l'entité de gestion de ressources virtualisées 30. Cette nouvelle mise à jour est initiée par l'entité d'optimisation 20 conformément à l'étape E35.

A l'étape E33, lorsqu'une fonction réseau virtualisée VNF A' 41 réalisant une fonction identique à la fonction initiale VNF A 40 est déjà présente dans une zone géographique comprenant des ressources non saturées, distincte de la zone géographique dans laquelle est mise en oeuvre la fonction initiale VNF A 40, la mise à jour de la séquence consiste à substituer la fonction initiale VNF A 40 par la fonction réseau virtualisée VNF A' 41 déjà mise en oeuvre dans cette autre zone géographique. Ainsi les étapes d'allocation de ressources pour la fonction réseau virtualisé VNF A' 41 et de création de cette dernière sont avantageusement remplacées par une étape d'établissement d'une connexion avec la fonction réseau virtualisée de cette autre zone géographique.

Dans un autre mode de réalisation, seuls les flux de signalisation pour lesquels une surcharge du trafic réseau est détectée sont redirigés vers l'entité d'optimisation 20 avant d'être transmis vers la nouvelle fonction réseau virtualisée VNF A' 41.

Dans encore un autre mode de réalisation, les flux de signalisation pour lesquels une surcharge du trafic réseau est détectée ne sont pas redirigés vers l'entité d'optimisation 20, mais sont mis en attente au niveau de la fonction initiale VNF A 40 jusqu'à la création et l'activation de la nouvelle fonction réseau virtualisée VNF A' 41.

Dans un autre mode de réalisation les flux de signalisation en provenance de la fonction réseau virtualisée 40 sont traités par l'entité d'optimisation 20 qui lorsqu'elle prend en charge des opérations dites de scaling (e.g. scaling-out multi-PoPs), déleste l'entité de gestion de ressources virtualisées 30 qui ne reçoit plus ces requêtes.

Dans un autre mode de réalisation, l'entité de gestion de ressources virtualisées 30 envoie à l'entité d'orchestration 10 une demande de confirmation relative à la mise à jour de la séquence S de fonctions réseaux virtualisées. Cette demande de confirmation est par exemple réalisée lors de l'étape E7 de notification de la mise à jour de la séquence. Lorsque la mise à jour n'est pas confirmée par l'entité d'orchestration 10, cette dernière envoie alors une commande de retour en arrière consistant à mettre de nouveau en oeuvre la fonction initiale VNF A 40. Ceci permet d'assurer que la mise à jour est conforme à une politique locale à l'entité d'orchestration 10.

Dans un autre mode de réalisation, une entité d'optimisation 20 est mise en oeuvre par occurrence de service réseau mise en oeuvre. Ce mode de réalisation permet d'appliquer des politiques de gestion très précises par type de service (e.g. fréquence élevée de vérification de la qualité du service). L'entité d'optimisation 20 est alors mise en oeuvre au moment de la mise en oeuvre d'une occurrence de service réseau.

Dans un autre mode de réalisation, une entité d'optimisation 20 est en charge de la mise à jour de plusieurs occurrences d'un service réseau. Ce mode de réalisation présente en particulier l'avantage de nécessiter un nombre moins important d'entités d'optimisation 20 dans le réseau de communication 1. La mise en oeuvre d'une nouvelle entité d'optimisation 20 à chaque mise à jour d'un service réseau est en particulier évitée. Ce mode de réalisation est pertinent lorsque les règles d'optimisation sont génériques à l'ensemble des occurrences de service réseau.

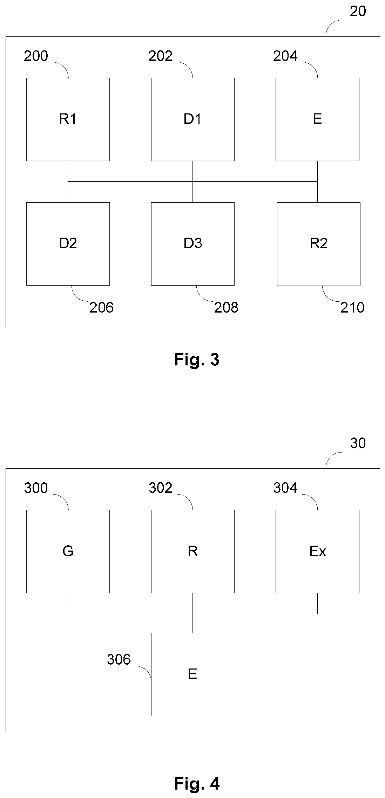

La **figure 3** représente une entité d'optimisation 20 de fonctions réseaux virtualisées selon un mode particulier de réalisation. L'entité d'optimisation 20 comprend :
- un module de réception 200, agencé pour recevoir un flux de signalisation et/ou de caractérisation d'un média depuis une fonction réseau virtualisée, dite «fonction initiale », d'une séquence d'au moins une fonction réseau virtualisée formant un service réseau en cours d'exécution ;
- un premier module de détermination 202, agencé pour déterminer en fonction du flux de signalisation et/ou de caractérisation d'un média reçu, et de règles de gestion prédéfinies associées au flux, que la fonction initiale dispose de capacités insuffisantes pour l'exécution stable du service réseau ;
- un module d'envoi 204, agencé pour envoyer à une entité de gestion de ressources virtualisées en charge de la gestion de la fonction initiale, une commande de mise à jour de la séquence, la fonction initiale étant, après exécution de la commande, remplacée ou complétée dans la séquence par au moins une nouvelle fonction réseau virtualisée apte à l'exécution stable du service réseau.

Dans un autre mode de réalisation, l'entité d'optimisation comprend en outre un module d'obtention, agencé pour obtenir des règles de gestion, le premier module de détermination 202 étant agencé pour déterminer que la fonction initiale dispose de capacités insuffisantes pour l'exécution stable du service réseau en fonction desdites règles.

Dans un autre mode de réalisation, l'entité d'optimisation 20 comprend en outre un deuxième module de réception 210 de données issues du réseau. Ces données réseaux sont par exemple reçues depuis une sonde pouvant être mise en oeuvre de manière dynamique par l'entité d'optimisation 20. Une telle sonde est par exemple positionnée sur une interface de l'équipement mettant en oeuvre la fonction réseau virtualisée en cours d'exécution (e.g. sonde sur une interface d'un équipement supportant une fonction de serveur TURN pour « Traversai Using Relays around NAT » afin de récupérer par exemple un état de charge d'un lien réseau). L'utilisation d'une telle sonde permet notamment une analyse plus fine des flux de signalisation et/ou média émis par la fonction réseau virtualisée en cours d'exécution. La précision de la mise à jour de la séquence de fonctions réseaux virtualisées du service réseau est également accrue. Le premier module de détermination 202 est, dans ce mode de réalisation, agencé pour également prendre en compte les informations reçues depuis le deuxième module de réception 210 lors de la détermination que la fonction initiale dispose de capacités insuffisantes pour l'exécution stable du service réseau.

Dans un autre mode de réalisation, l'entité d'optimisation 20 comprend en outre un deuxième module de détermination 206, agencé pour déterminer des capacités nécessaires pour l'exécution stable du service réseau, le module d'envoi étant agencé pour envoyer à l'entité de gestion de ressources virtualisées 30 en charge de la fonction initiale les capacités avec la commande de mise à jour.

Dans encore un autre mode de réalisation, l'entité d'optimisation 20 comprend un troisième module de détermination 208, agencé pour déterminer une zone géographique disposant de ressources non-saturées, le module d'envoi étant agencé pour envoyer une commande de mise à jour commandant une mise à jour de la séquence, dans laquelle la au moins une nouvelle fonction réseau virtualisée appartient à cette zone géographique.

La **figure 4** représente une entité de gestion de ressources virtualisées 30 selon un mode particulier de réalisation. L'entité de gestion de ressources virtualisées comprend :
- un module de gestion 300, agencé pour gérer une fonction réseau virtualisée, dite « fonction initiale », d'une séquence d'au moins une fonction réseau virtualisée formant un service réseau ;
- un module de réception 302, agencé pour recevoir depuis une entité d'optimisation de fonctions réseaux virtualisées 20, une commande de mise à jour de la séquence ;
- un module d'exécution 304, agencé pour exécuter la commande de mise à jour, la fonction initiale étant, après exécution de la commande, remplacée ou complétée dans la séquence par au moins une nouvelle fonction réseau virtualisée apte à une exécution stable du service réseau ;
- un module d'envoi 306, agencé pour envoyer à une entité d'orchestration 10 une notification de mise à jour de la séquence.

L'invention est mise en oeuvre au moyen de composants logiciels et/ou matériels. Dans cette optique, le terme "module" peut correspondre dans ce document aussi bien à un composant logiciel, qu'à un composant matériel ou à un ensemble de composants matériels et/ou logiciels, apte à mettre en oeuvre une fonction ou un ensemble de fonctions, selon ce qui est décrit précédemment pour le module concerné.

Un composant logiciel correspond à un ou plusieurs programmes d'ordinateur, un ou plusieurs sous-programmes d'un programme, ou de manière plus générale à tout élément d'un programme ou d'un logiciel. Un tel composant logiciel est stocké en mémoire puis chargé et exécuté par un processeur de données d'une entité physique et est susceptible d'accéder aux ressources matérielles de cette entité physique (mémoires, supports d'enregistrement, bus de communication, cartes électroniques d'entrées/sorties, interfaces utilisateur, etc).

De la même manière, un composant matériel correspond à tout élément d'un ensemble matériel (ou hardware). Il peut s'agir d'un composant matériel programmable ou non, avec ou sans processeur intégré pour l'exécution de logiciel. Il s'agit par exemple d'un circuit intégré, d'une carte à puce, d'une carte électronique pour l'exécution d'un micrologiciel (firmware), etc.

Dans un mode de réalisation particulier, les modules 200, 202, 204, 206, 208 et 210 sont agencés pour mettre en oeuvre le procédé de gestion précédemment décrit. Il s'agit de préférence de modules logiciels comprenant des instructions logicielles pour faire exécuter celles des étapes du procédé de gestion précédemment décrit, mises en oeuvre par une entité d'optimisation. L'invention concerne donc aussi :
- un programme pour une entité d'optimisation, comprenant des instructions de code de programme destinées à commander l'exécution des étapes du procédé de gestion précédemment décrit, lorsque ledit programme est exécuté par ladite entité ;
- un support d'enregistrement lisible par une entité de gestion sur lequel est enregistré le programme pour une telle entité.

Les modules logiciels peuvent être stockés dans ou transmis par un support de données. Celui-ci peut être un support matériel de stockage, par exemple un CD-ROM, une disquette magnétique ou un disque dur, ou bien un support de transmission tel qu'un signal électrique, optique ou radio, ou un réseau de télécommunication.

## Revendications

1. Procédé de gestion, dans un réseau de communication (1), d'un service réseau en cours d'exécution, ledit service réseau étant formé d'une séquence d'au moins une fonction réseau virtualisée gérée par une entité de gestion de ressources virtualisées (30), comprenant les étapes suivantes mises en oeuvre par une entité d'optimisation de fonctions réseaux virtualisées (20) :
- réception (E2) d'un flux de signalisation et/ou de caractérisation d'un média depuis une fonction réseau virtualisée de ladite séquence, dite « fonction initiale » ;
- détermination (E32), en fonction dudit flux de signalisation et/ou de caractérisation d'un média reçu, et d'une règle de gestion prédéfinie associée audit flux, que ladite fonction initiale dispose de capacités insuffisantes pour l'exécution stable dudit service réseau ;
- envoi (E35), à ladite entité de gestion de ressources virtualisées, d'une commande de mise à jour comprenant au moins une action, obtenue à partir de ladite règle de gestion associée audit flux, de mise à jour de ladite séquence, ladite fonction initiale étant, après exécution de ladite commande, remplacée ou complétée dans ladite séquence par au moins une nouvelle fonction réseau virtualisée apte à l'exécution stable dudit service réseau.

2. Procédé selon la revendication 1, comprenant en outre une étape de détermination (E33) de capacités nécessaires pour l'exécution stable dudit service réseau, lesdites capacités nécessaires étant envoyées à l'entité de gestion de ressources virtualisées avec ladite commande de mise à jour, la séquence étant mise à jour en fonction desdites capacités nécessaires.

3. Procédé selon la revendication 1, dans lequel ladite fonction initiale étant mise en oeuvre dans une première zone géographique donnée, ledit procédé comprend, préalablement à l'étape d'envoi, lorsque ladite fonction initiale est mise en oeuvre par des ressources saturées de ladite première zone, une détermination d'une deuxième zone géographique disposant de ressources non-saturées, ladite commande de mise à jour commandant une mise à jour de ladite séquence, dans laquelle ladite au moins une nouvelle fonction réseau virtualisée appartient à ladite deuxième zone géographique.

4. Procédé selon la revendication 3, dans lequel une fonction réseau virtualisée identique à ladite fonction initiale, dite « fonction identique », étant mise en oeuvre dans la deuxième zone géographique avant l'étape d'envoi, ladite commande de mise à jour commande à l'entité de gestion de ressources virtualisées de remplacer ou compléter dans la séquence, ladite fonction initiale par ladite fonction identique.

5. Procédé selon la revendication 1, dans lequel ledit service réseau formé d'une séquence d'au moins une fonction réseau virtualisée, dite « séquence initiale », appartient à un catalogue de services réseaux d'une entité d'orchestration en charge du pilotage des entités de gestion de ressources virtualisées dudit réseau, ledit procédé comprenant en outre :
- une notification (E7), par l'entité de gestion de ressources virtualisées, à ladite entité d'orchestration, de la séquence mise à jour ;
- une mise à jour (E8), par l'entité d'orchestration, du service réseau formé de la séquence initiale dans ledit catalogue.

6. Procédé selon la revendication 5, dans lequel la mise à jour du service réseau formé de la séquence initiale consiste, dans ledit catalogue, en :
- une substitution du service réseau formé de ladite séquence initiale par un service réseau formé de ladite séquence mise à jour ; ou
- un ajout d'un service réseau formé de ladite séquence mise à jour.

7. Entité d'optimisation (20) de fonctions réseaux virtualisées, dans un réseau de communication, comprenant :
- un module de réception (200), agencé pour recevoir un flux de signalisation et/ou de caractérisation d'un média depuis une fonction réseau virtualisée, dite « fonction initiale », d'une séquence d'au moins une fonction réseau virtualisée formant un service réseau en cours d'exécution ;
- un premier module de détermination (202), agencé pour déterminer en fonction dudit flux de signalisation et/ou de caractérisation d'un média reçu, et de règles de gestion prédéfinies associées audit flux, que ladite fonction initiale dispose de capacités insuffisantes pour l'exécution stable dudit service réseau ;
- un module d'envoi (204), agencé pour envoyer à une entité de gestion de ressources virtualisées en charge de la gestion de ladite fonction initiale, une commande de mise à jour de ladite séquence, ladite fonction initiale étant, après exécution de ladite commande, remplacée ou complétée dans ladite séquence par au moins une nouvelle fonction réseau virtualisée apte à l'exécution stable dudit service réseau.

8. Entité d'optimisation selon la revendication 7, comprenant en outre un deuxième module de détermination (206), agencé pour déterminer des capacités nécessaires pour l'exécution stable dudit service réseau, le module d'envoi étant agencé pour envoyer lesdites capacités à ladite entité de gestion de ressources virtualisées avec la commande de mise à jour.

9. Entité d'optimisation selon la revendication 7, comprenant en outre un troisième module de détermination (208), agencé pour déterminer une zone géographique disposant de ressources non-saturées, le module d'envoi étant agencé pour envoyer une commande de mise à jour commandant une mise à jour de ladite séquence, dans laquelle ladite au moins une nouvelle fonction réseau virtualisée appartient à ladite zone géographique disposant de ressources non-saturées.

10. Entité de gestion de ressources virtualisées (30), dans un réseau de communication, comprenant :
- un module de gestion (300), agencé pour gérer une fonction réseau virtualisée, dite « fonction initiale », d'une séquence d'au moins une fonction réseau virtualisée formant un service réseau ;
- un module de réception (302), agencé pour recevoir depuis une entité d'optimisation de fonctions réseaux virtualisées, une commande de mise à jour de ladite séquence ;
- un module d'exécution (304), agencé pour exécuter ladite commande de mise à jour, ladite fonction initiale étant, après exécution de ladite commande, remplacée ou complétée dans ladite séquence par au moins une nouvelle fonction réseau virtualisée apte à une exécution stable dudit service réseau ;
- un module d'envoi (306), agencé pour envoyer à une entité d'orchestration 10 une notification de mise à jour de ladite séquence.

11. Système (100) de gestion d'un service réseau, dans un réseau de communication, comprenant :
- une entité d'optimisation (20) de fonctions réseaux virtualisées selon la revendication 7 ; et
- une entité de gestion (30) de ressources virtualisées selon la revendication 10.

12. Système selon la revendication 11, comprenant en outre :
- une entité d'orchestration (10) en charge du pilotage d'au moins une entité de gestion de ressources virtualisées selon la revendication 10.

13. Programme pour une entité d'optimisation de fonctions réseaux virtualisées, comprenant des instructions de code de programme destinées à commander l'exécution des étapes du procédé de gestion selon l'une des revendications 1 à 6, lorsque ledit programme est exécuté par une entité d'optimisation de fonctions réseaux virtualisées.

14. Support d'enregistrement lisible par une entité d'optimisation de fonctions réseaux virtualisées sur laquelle est enregistré le programme selon la revendication 13.

## Patentansprüche

1. Verfahren zur Verwaltung eines in Ausführung befindlichen Netzwerkdiensts in einem Kommunikationsnetzwerk (1), wobei der Netzwerkdienst von einer Sequenz mindestens einer virtualisierten Netzwerkfunktion gebildet wird, die von einer Verwaltungsentität virtualisierter Ressourcen (30) verwaltet wird, das die folgenden Schritte enthält, die von einer Optimierungsentität virtualisierter Netzwerkfunktionen (20) durchgeführt werden:
- Empfang (E2) eines Signalisierungs- und/oder Charakterisierungsstroms eines Mediums ausgehend von einer virtualisierten Netzwerkfunktion der Sequenz, "Ausgangsfunktion" genannt;
- Bestimmung (E32), abhängig vom empfangenen Signalisierungs- und/oder Charakterisierungsstrom eines Mediums und von einer dem Strom zugeordneten vordefinierten Verwaltungsregel, dass die Ausgangsfunktion über unzureichende Kapazitäten für die stabile Ausführung des Netzwerkdiensts verfügt;
- Senden (E35) eines Aktualisierungsbefehls an die Verwaltungsentität virtualisierter Ressourcen, der mindestens eine ausgehend von der dem Strom zugeordneten Verwaltungsregel erhaltene Aktion der Aktualisierung der Sequenz enthält, wobei die Ausgangsfunktion nach der Ausführung des Befehls in der Sequenz durch mindestens eine neue virtualisierte Netzwerkfunktion ersetzt oder vervollständigt wird, die für die stabile Ausführung des Netzwerkdiensts geeignet ist.

2. Verfahren nach Anspruch 1, das außerdem einen Schritt der Bestimmung (E33) von Kapazitäten enthält, die für die stabile Ausführung des Netzwerkdiensts notwendig sind, wobei die notwendigen Kapazitäten mit dem Aktualisierungsbefehl an die Verwaltungsentität virtualisierter Ressourcen gesendet werden, wobei die Sequenz abhängig von den notwendigen Kapazitäten aktualisiert wird.

3. Verfahren nach Anspruch 1, wobei, wenn die Ausgangsfunktion in einer gegebenen ersten geographischen Zone durchgeführt wird, das Verfahren vor dem Sendeschritt, wenn die Ausgangsfunktion von gesättigten Ressourcen der ersten Zone durchgeführt wird, eine Bestimmung einer zweiten geographischen Zone enthält, die über nicht gesättigte Ressourcen verfügt, wobei der Aktualisierungsbefehl eine Aktualisierung der Sequenz befiehlt, in der die mindestens eine neue virtualisierte Netzwerkfunktion zur zweiten geographischen Zone gehört.

4. Verfahren nach Anspruch 3, wobei, wenn eine virtualisierte Netzwerkfunktion gleich der Ausgangsfunktion, "gleiche Funktion" genannt, in der zweiten geographischen Zone vor dem Sendeschritt durchgeführt wird, der Aktualisierungsbefehl der Verwaltungsentität virtualisierter Ressourcen befiehlt, in der Sequenz die Ausgangsfunktion durch die gleiche Funktion zu ersetzen oder zu vervollständigen.

5. Verfahren nach Anspruch 1, wobei der von einer "Ausgangssequenz" genannten Sequenz mindestens einer virtualisierten Netzwerkfunktion gebildete Netzwerkdienst zu einem Katalog von Netzwerkdiensten einer Orchestrierungsentität gehört, die für die Steuerung der Verwaltungsentitäten virtualisierter Ressourcen des Netzwerks zuständig ist, wobei das Verfahren außerdem enthält:
- eine Mitteilung (E7) der aktualisierten Sequenz durch die Verwaltungsentität virtualisierter Ressourcen an die Orchestrierungsentität;
- eine Aktualisierung (E8) des von der Ausgangssequenz im Katalog gebildeten Netzwerkdiensts durch die Orchestrierungsentität.

6. Verfahren nach Anspruch 5, wobei die Aktualisierung des von der Ausgangssequenz im Katalog gebildeten Netzwerkdiensts besteht aus:
- einem Ersatz des von der Ausgangssequenz gebildeten Netzwerkdiensts durch einen von der aktualisierten Sequenz gebildeten Netzwerkdienst; oder
- einer Hinzufügung eines von der aktualisierten Sequenz gebildeten Netzwerkdiensts.

7. Optimierungsentität (20) virtualisierter Netzwerkfunktionen in einem Kommunikationsnetz, die enthält:
- ein Empfangsmodul (200), das eingerichtet ist, um einen Signalisierungs- und/oder Charakterisierungsstrom eines Mediums ausgehend von einer virtualisierten Netzwerkfunktion, "Ausgangsfunktion" genannt, einer Sequenz mindestens einer virtualisierten Netzwerkfunktion, die einen in Ausführung befindlichen Netzwerkdienst bildet, zu empfangen;
- ein erstes Bestimmungsmodul (202), das eingerichtet ist, um abhängig vom empfangenen Signalisierungs- und/oder Charakterisierungsstrom eines Mediums und von dem Strom zugeordneten vordefinierten Verwaltungsregeln zu bestimmen, dass die Ausgangsfunktion über unzureichende Kapazitäten für die stabile Ausführung des Netzwerkdiensts verfügt;
- ein Sendemodul (204), das eingerichtet ist, um an eine Verwaltungsentität virtualisierter Ressourcen, die für die Verwaltung der Ausgangsfunktion zuständig ist, einen Aktualisierungsbefehl der Sequenz zu senden, wobei die Ausgangsfunktion nach Ausführung des Befehls in der Sequenz durch mindestens eine neue virtualisierte Netzwerkfunktion ersetzt oder vervollständigt wird, die für die stabile Ausführung des Netzwerkdiensts geeignet ist.

8. Optimierungsentität nach Anspruch 7, die außerdem ein zweites Bestimmungsmodul (206) enthält, das eingerichtet ist, um für die stabile Ausführung des Netzwerkdiensts notwendige Kapazitäten zu bestimmen, wobei das Sendemodul eingerichtet ist, um die Kapazitäten mit dem Aktualisierungsbefehl an die Verwaltungsentität virtualisierter Ressourcen zu senden.

9. Optimierungsentität nach Anspruch 7, die außerdem ein drittes Bestimmungsmodul (208) enthält, das eingerichtet ist, um eine geographische Zone zu bestimmen, die über nicht gesättigte Ressourcen verfügt, wobei das Sendemodul eingerichtet ist, um einen Aktualisierungsbefehl zu senden, der eine Aktualisierung der Sequenz befiehlt, wobei die mindestens eine neue virtualisierte Netzwerkfunktion zu der geographischen Zone gehört, die über nicht gesättigte Ressourcen verfügt.

10. Verwaltungsentität virtualisierter Ressourcen (30) in einem Kommunikationsnetz, die enthält:
- ein Verwaltungsmodul (300), das eingerichtet ist, um eine "Ausgangsfunktion" genannte virtualisierte Netzwerkfunktion einer Sequenz mindestens einer virtualisierten Netzwerkfunktion zu verwalten, die einen Netzwerkdienst bildet;
- ein Empfangsmodul (302), das eingerichtet ist, um ausgehend von einer Optimierungsentität virtualisierter Netzwerkfunktionen einen Aktualisierungsbefehl der Sequenz zu empfangen;
- ein Ausführungsmodul (304), das eingerichtet ist, um den Aktualisierungsbefehl auszuführen, wobei die Ausgangsfunktion nach Ausführung des Befehls in der Sequenz durch mindestens eine neue virtualisierte Netzwerkfunktion ersetzt oder vervollständigt wird, die für eine stabile Ausführung des Netzwerkdiensts geeignet ist;
- ein Sendemodul (306), das eingerichtet ist, um eine Aktualisierungsmitteilung der Sequenz an eine Orchestrierungsentität (10) zu senden.

11. System (100) zur Verwaltung eines Netzwerkdiensts in einem Kommunikationsnetz, das enthält:
- eine Optimierungsentität (20) virtualisierter Netzwerkfunktionen nach Anspruch 7; und
- eine Verwaltungsentität (30) virtualisierter Ressourcen nach Anspruch 10.

12. System nach Anspruch 11, das außerdem enthält:
- eine Orchestrierungsentität (10), die für das Steuern mindestens einer Verwaltungsentität virtualisierter Ressourcen nach Anspruch 10 zuständig ist.

13. Programm für eine Optimierungsentität virtualisierter Netzwerkfunktionen, das Programmcodeanweisungen enthält, die dazu bestimmt sind, die Ausführung der Schritte des Verwaltungsverfahrens nach einem der Ansprüche 1 bis 6 zu befehlen, wenn das Programm von einer Optimierungsentität virtualisierter Netzwerkfunktionen ausgeführt wird.

14. Aufzeichnungsträger, der von einer Optimierungsentität virtualisierter Netzwerkfunktionen lesbar ist, auf der das Programm nach Anspruch 13 aufgezeichnet ist.

## Claims

1. Method for managing a network service that is in the process of being executed, in a communication network (1), said network service being formed by a sequence of at least one virtualized network function managed by a virtualized resources management entity (30), comprising the following steps implemented by a virtualized network function optimization entity (20):
- receiving (E2) a stream signaling and/or characterizing a media from a virtualized network function of said sequence, called the "initial function";
- determining (E32), on the basis of said received stream signaling and/or characterizing a media, and of a predefined management rule associated with said stream, that said initial function has insufficient capacity for the stable execution of said network service;
- sending (E35), to said virtualized resources management entity, an updating command comprising at least one action, produced on the basis of said management rule associated with said stream, for updating said sequence, said initial function being, after execution of said command, replaced or complemented in said sequence with at least one new virtualized network function capable of stably executing said network service.

2. Method according to Claim 1, further comprising a step of determining (E33) the capacity required for the stable execution of said network service, said necessary capacity being sent to the virtualized resources management entity with said updating command, the sequence being updated on the basis of said required capacity.

3. Method according to Claim 1, wherein, said initial function being implemented in a given first geographic area, said method comprises, before the sending step, if said initial function is implemented by saturated resources of said first area, a determination of a second geographic area having non-saturated resources, said updating command causing an update of said sequence, in which said at least one new virtualized network function belongs to said second geographic area.

4. Method according to Claim 3, wherein, a virtualized network function identical to said initial function, called the "identical function", being implemented in the second geographic area before the sending step, said updating command causes the virtualized resources management entity to replace said initial function or complement it, in the sequence, with said identical function.

5. Method according to Claim 1, wherein said network service formed from a sequence of at least one virtualized network function, called the "initial sequence", belongs to a list of network services of an orchestration entity responsible for controlling the virtualized resources management entities of said network, said method further comprising:
- notification (E7), by the virtualized resources management entity to said orchestration entity, of the updated sequence;
- updating (E8), by the orchestration entity, of the network service formed from the initial sequence in said list.

6. Method according to Claim 5, wherein the updating of the network service formed from the initial sequence consists, in said list, of:
- replacing the network service formed from said initial sequence with a network service formed from said updated sequence; or
- adding a network service formed from said updated sequence.

7. Virtualized network function optimization entity (20), in a communication network, comprising:
- a receiving module (200), arranged to receive a stream signaling and/or characterizing a media from a virtualized network function, called the "initial function", of a sequence of at least one virtualized network function forming a network service that is in the process of being executed;
- a first determination module (202), arranged to determine, on the basis of said received stream signaling and/or characterizing a media, and of predefined management rules associated with said stream, that said initial function has insufficient capacity for the stable execution of said network service;
- a sending module (204), arranged to send, to a virtualized resources management entity responsible for managing said initial function, a command for updating said sequence, said initial function being, after execution of said command, replaced or complemented in said sequence with at least one new virtualized network function capable of stably executing said network service.

8. Optimization entity according to Claim 7, further comprising a second determination module (206), arranged to determine the capacity required for the stable execution of said network service, the sending module being arranged to send said capacity to said virtualized resources management entity with the updating command.

9. Optimization entity according to Claim 7, further comprising a third determination module (208), arranged to determine a geographic area having non-saturated resources, the sending module being arranged to send an updating command causing an update of said sequence, in which said at least one new virtualized network function belongs to said geographic area having non-saturated resources.

10. Virtualized resources management entity (30), in a communication network, comprising:
- a management module (300), arranged to manage a virtualized network function, called the "initial function", of a sequence of at least one virtualized network function forming a network service;
- a receiving module (302), arranged to receive a command for updating said sequence from a virtualized network function optimization entity;
- an execution module (304), arranged to execute said updating command, said initial function being, after execution of said command, replaced or complemented in said sequence with at least one new virtualized network function capable of stably executing said network service;
- a sending module (306), arranged to send a notification of the updating of said sequence to an orchestration entity (10).

11. System (100) for managing a network service, in a communication network, comprising:
- a virtualized network function optimization entity (20) according to Claim 7; and
- a virtualized resources management entity (30) according to Claim 10.

12. System according to Claim 11, further comprising:
- an orchestration entity (10) responsible for controlling at least one virtualized resources management entity according to Claim 10.

13. Program for a virtualized network function optimization entity, comprising program code instructions intended to command the execution of the steps of the method according to any of Claims 1 to 6, when said program is executed by a virtualized network function optimization entity.

14. Recording medium, readable by a virtualized network function optimization entity, on which the program according to Claim 13 is recorded.
